# EUROPEAN PATENT SPECIFICATION

(11) **EP 2 661 472 B1**
(45) Date of publication and mention of the grant of the patent: **17.06.2015**
(21) Application number: 11701165.0
(22) Date of filing: 04.01.2011
(51) Int. Cl.: C09D 5/24, C09D 4/00, C09D 183/06, G02B 1/10

(54) **METHOD FOR PREPARING ANTISTATIC UV CURABLE HARDCOATINGS ON OPTICAL ARTICLES**
VERFAHREN ZUR HERSTELLUNG VON ANTISTATISCHEN UV-HÄRTBARE HARTBESCHICHTUNGEN AUF OPTISCHEN ARTIKELN
PROCÉDÉ DE PRÉPARATION DE COUCHES DURES ANTISTATIQUES DURCISSABLES SOUS UV SUR DES ARTICLES D'OPTIQUE

(43) Date of publication of application: 13.11.2013
(73) Proprietor: Essilor International (Compagnie Générale d'Optique), 94220 Charenton-le-Pont (FR)
(72) Inventor: VALERI, Robert, Dallas, Texas 75234 (US)
(74) Representative: Cabinet Plasseraud
(86) International application number: PCT/US2011/020111
(87) International publication number: WO 2012/093995

(56) References cited:
- WO-A1-01/44381
- WO-A1-2010/049503
- US-B2- 6 780 232

## Description

The present invention relates to a method for manufacturing antistatic UV-cured hard-coatings on optical articles using a UV curable monomer solution based on epoxyalkylalkoxysilanes and triarylsulfonium or diaryliodonium salts as photoinitiator.

The build-up of static charge on plastic elements, especially plastic ophthalmic lenses coated with abrasion-resistant coatings, attracts dust and is unacceptable in many applications. In the case of eyewear, these dust particles cause light scattering or haze which can severely limit the visual acuity of the wearer and necessitates frequent cleaning.

Anti-static behavior of transparent coatings on optical articles can be obtained by first coating the substrate with a transparent conducting coating followed by an abrasion resistant hard-coating or by incorporating conducting molecules or particles into the hard-coating itself.

The present invention is based on the findings that it is possible to prepare excellent UV-cured transparent epoxy-based hard-coatings having good anti-static properties, by using rather high concentrations of selected photo-initiators whose degradation products remain in the hard-coating where they play the role of the anti-static electroconducting component. It has been surprisingly found that good anti-static performance of the final hardcoatings can be obtained only with epoxysilane monomers that are *not* subjected to hydrolysis before UV curing.

This was rather surprising since several documents drawn to the preparation of UV curable hard-coatings on ophthalmic lenses explicitly teach hydrolyzing epoxysilane monomers in a UV curable composition before the step of UV curing.

For example US 6,100313, US 6,780,232 and US 7,037,585 disclose methods for preparing epoxy based hard-coatings on optical substrates, comprising a step of completely hydrolyzing a portion of the epoxy-functional alkoxysilanes followed by addition of non-hydrolyzed epoxy-functional silane to reduce viscosity and increase stability of the coating composition. Similarly, US 2008/0047468 discloses a method for preparing UV cured, easily tintable hard-coatings, said method comprising, as a first step, the hydrolysis of the trialkoxysilane monomers in the coating solution.

The present inventors have found that is was not only possible to prepare UV cured transparent hard-coatings *without* previously hydrolyzing the trialkoxysilanes, thereby preventing the viscosity problems described in the above prior art documents, but that the absence of hydrolysis was an essential feature for obtaining good antistatic performance when using triarylsulfonium salts or diaryliodonium salts both as photoinitiator and anti-static agent.

The present invention is therefore drawn to a method for manufacturing antistatic UV-cured hard-coatings on optical articles, comprising (a) coating an organic or mineral optical substrate with an essentially anhydrous solution containing from 20 % to 90 % by weight, relative to the total dry matter of the solution, of at least one non hydrolyzed epoxyalkyltrialkoxysilane and at least 3.2 % by weight, relative to the total dry matter of the solution, of at least one photoinitiator selected from the group consisting of triarylsulfonium salts, diaryliodonium salts, and mixtures thereof, preferably from the group consisting of triarylsulfonium salts, (b) curing the resulting coating by irradiation with UV-radiation, said method preferably not comprising any hydrolysis step before the UV curing step.

In the present application when it is specified that the epoxysilane monomers are cured in the "non hydrolyzed form" or when the method is defined as "not comprising any hydrolysis step before the UV curing step", this means that when the monomer solution is submitted to the irradiation step, at least 90 %, preferably at least 95%, and even more preferably at least 98 % of the alkoxy groups of the trialkoxysilanes are still covalently bound to the silicon atom and have not been hydrolyzed to silanol groups.

In step (a) of the method of the present invention an optical substrate is coated with an essentially anhydrous solution containing two essential components, i.e. a non hydrolyzed epoxytrialkoxysilane monomer and a triarylsulfonium or diaryliodonium salt having a weakly nucleophilic counter-ion. The triarylsulfonium salt is a cationic photoinitiator which, upon photolysis, will cleave and produce an aryl radical and a diarylsulfinium, cation-radical (see J.V. Crivello, D.A. Conlon, and J.L. Lee, "The Synthesis and Characterization of Cationic Photoinitiators Bearing Two and Three Photoactive Triarylsulfonium Groups in the Same Molecule", Polymer Bulletin 14, 279 - 286 (1985)). The diarylsulfinium cation-radical then generates, in subsequent reactions, strong Bronsted acids which initiate the cationic polymerization (epoxy ring opening) of the epoxy-functional monomers and simultaneously catalyze the hydrolysis and condensation of the alkoxysilane groups (sol-gel process) using atmospheric moisture during the photolysis. The reaction mechanism of diaryliodonium salts is very similar to that of triarylsulfonium salts.

Apart from initiating the cationic polymerisation of the epoxy groups and the hydrolysis of the alkoxysilane groups of the epoxyalkyltrialkoxysilane, the triarylsulfonium or diaryliodonium salts, or rather their degradation products, act as electroconducting anti-static agents.

Antistatic performance of a material may be assessed by measuring the "decay time" according to ISTM 02-066. Decay time is the time to have 36.7, % of the initial maximum voltage remaining after corona discharge. It is generally considered that decay times less, than one second are good and decay times less than 0.25 second are very good.

The inventors have measured the anti-static performance of hard-coatings containing increasing amounts of triarylsulfonium salts (see Example 1) and have found that there was a minimum threshold concentration of about 3 % by weight below which the decay time of the final cured hard-coatings dramatically increased, i.e. the antistatic performances undesirably decreased.

The method of the present invention therefore uses coating compositions containing at least 3.2 % by weight, preferably between 3.5 % by weight and 15 % by weight, more preferably between 4.0 % and 15 % by weight, relative to the total dry matter of the composition, of at least one triarylsulfonium salt or diaryliodonium salt or mixtures thereof, preferably triarylsulfonium salts.

The triarylsulfonium or diaryliodonium salts used in the present invention advantageously have counter-ions of low nucleophilicity and are preferably selected from triarylsulfonium hexafluoroantimonate, triarylsulfonium hexafluorophosphate, diaryliodonium hexafluoroantimonate and diaryliodonium hexafluorophosphate salts. Triarylsulfonium hexafluoroantimonate is available for example from Dow Chemical Company under the trademark CYRACURE™ UVI-6976 (50 % by weight in propylene carbonate). Triarylsulfonium hexafluorophosphate is available for example from Dow Chemical Company under the trademark CYRACURE™ UVI-6992 (50 % by weight in propylene carbonate). Diaryliodonium hexafluorophosphate is available for example from Ciba Specialty Chemicals, under the reference IRG-250, or from Aldrich under the reference 548014: Diaryliodonium hexafluoroantimonate is available for example from Sartomer Company under the reference SarCat CD 1012

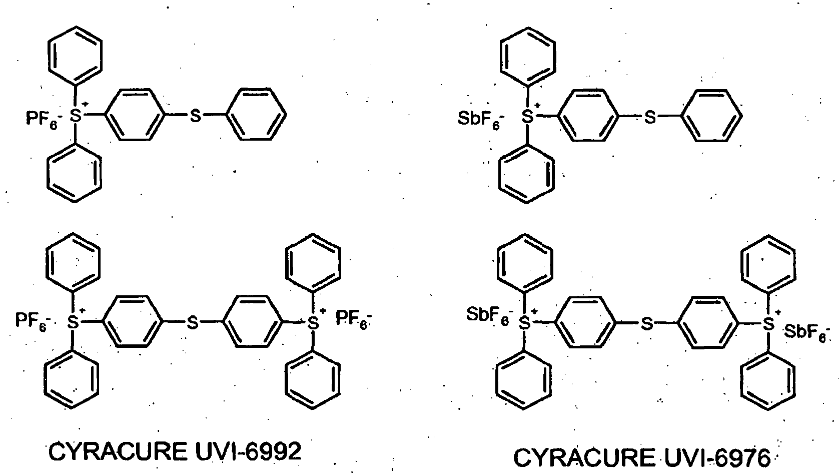

The epoxyalkyltrialkoxysilanes used in the present invention are preferably selected from glycidyl(C₁₋₃ alkyl)-tri(C₁₋₃ alkoxy)silanes. Hydrolysis of the C₁₋₃ alkoxy groups releases volatile alcohols (methanol, ethanol, propanol) which are easily evaporated from the curing coating composition.

The epoxyalkyltrialkoxysilane preferably is 3-glycidoxy-propyltrimethoxysilane.

The coating composition may further contain, in addition to the above epoxyalkyltrialkoxysilane, up to about 40 weight % of other polymerisable comonomers.

These polymerisable comonomers may be one or more dialkoxysilanes selected from the group consisting of di(C₁₋₃ alkyl)-di(alkoxy)silanes, di(glycidyl C₁₋₃ alkyl)-di(alkoxy)silanes and (C₁₋₃ alkyl)(glycidyl C₁₋₃ alkyl)-di(alkoxy)silanes.

These comonomers may also be polyfunctional monomers not containing any alkoxysilane groups, selected from polyfunctional acrylate monomers, polyfunctional epoxy monomers and mixtures thereof. The polyfunctional acrylate monomers are preferably selected from the group consisting of diacrylate, triacrylate and tetraacrylate monomers, such as pentaerythritol triacrylate or pentaerythritol tetraacrylate. The addition of polyfunctional acrylate monomers results in improved scratch resistance and better adherence to thermoplastic substrates.

When polyfunctional acrylate comonomers are used in combination with the epoxyalkyltrialkoxysilane, the coating composition advantageously further contains at least one free radical photo-initiator, preferably from 1 % to 5 % by weight, more preferably from 1.5 to 4.5 by weight, relative to the polyfunctional acrylate monomers, of a free radical photo-initiator. Such free radical photo-initiators can be selected for example from haloalkylated aromatic ketones such as chloromethylbenzophenones ; some benzoin ethers such as ethyl benzoin ether and isopropyl benzoin ether ; dialkoxyacetophenones such as diethoxyacetophenone and α,α-dimethoxy-α-phenylacetophenone; hydroxy ketones such as (1-[4-(2-hydroxyethoxy)-phenyl]-2-hydroxy-2-methyl-1-propan- 1-one) (Irgacure^{®} 2959 from CIBA), 1-hydroxy-cyclohexyl-phenyl-ketone (Irgacure^{®} 184 from CIBA) and 2-hydroxy-2-methyl-1-phenylpropan-1-one (such as Darocur^{®} 1173 sold by CIBA) ; alpha amino ketones, particularly those containing a benzoyl moiety, otherwise called alpha-amino acetophenones, for example 2-methyl 1-[4-phenyl]-2-morpholinopropan-1-one (Irgacure^{®} 907 from CIBA), (2-benzyl-2-dimethyl amino-1-(4-morpholinophenyl)-butan-1-one (Irgacure^{®} 369 from CIBA); monoacyl and bisacyl phosphine oxides and sulphides, such as phenylbis(2,4,6-trimethylbenzoyl)-phosphine oxide (Irgacure^{®} 819 sold by CIBA) ; triacyl phosphine oxides ; and mixtures thereof.

Non-alkoxysilane polyfunctional epoxy monomers may be selected from the group consisting of diglycerol tetraglycidyl ether, dipentaerythritol tetraglycidyl ether, sorbitol polyglycidyl ether, polyglycerol polyglycidyl ether, pentaerythritol polyglycidyl ether such as pentaerythritol tetraglycidyl ethertrimethylolethane triglycidyl ether, trimethylolmethane triglycidyl ether, trimethylolpropane triglycidyl ether, triphenylolmethane triglycidyl ether, trisphenol triglycidyl ether, tetraphenylol ethane triglycidyl ether, tetraglycidyl ether of tetraphenylol ethane, p-aminophenol triglycidyl ether, 1,2,6-hexanetriol triglycidyl ether, glycerol triglycidyl ether, diglycerol triglycidyl ether, glycerol ethoxylate triglycidyl ether, Castor oil triglycidyl ether, propoxylated glycerine triglycidyl ether, ethylene glycol diglycidyl ether, 1,4-butanediol diglycidyl ether, neopentyl glycol diglycidyl ether, cyclohexanedimethanol diglycidyl ether, dipropylene glycol diglycidyl ether, polypropylene glycol diglycidyl ether, dibromoneopentyl glycol diglycidyl ether, hydrogenated bisphenol A diglycidyl ether, (3,4-Epoxycyclohexane) methyl 3,4-epoxycylohexylcarboxylate and mixtures thereof.

Addition of such polyepoxides improves toughness of the resulting cured coating and adhesion to thermoset resin substrates.

Colloidal silica may be added to the essentially anhydrous coating composition in an amount of up to 50 % by weight, relative to the total dry matter of the composition. Addition of colloidal silica results in enhanced Bayer abrasion resistance.

As explained in the introduction of the present application, the inventors have found that it was not necessary and even unsuitable to hydrolyze the alkoxysilanes, for example by addition of acid or basic catalysts, before submitting the composition to UV photocuring. In other words, in a preferred embodiment of the present invention, the essentially anhydrous solution coated onto the optical substrate is essentially free of hydrolyzed epoxyalkylalkoxysilanes and hydrolyzed alkylalkoxysilanes. Not hydrolyzing the alkoxy groups of the monomers before application onto the substrate not only results in excellent anti-static performance as shown in Example 2, but also allows implementation of the method of the present invention without using any organic solvent. If necessary, the viscosity of the coating composition may easily be decreased by addition of polyfunctional low viscosity comonomers such as a mixture of pentaerythritol tri- and tetraacrylates.

In some cases however, for example when the coating composition contains high amounts of colloidal particles, it may be necessary to use an organic solvent which is subsequently evaporated from the composition before or during the photo-curing step. The amount of organic solvent(s) preferably does not exceed 30 % by weight of the coating composition. When using an organic solvent, the method of the present invention preferably comprises a separate step of drying the layer coated onto the optical substrate before submitting it to the curing step.

The UV-curable composition of the present invention advantageously further contains small amounts, preferably from 0.05 to 1.0 % by weight, more preferably 0.1 to 0.5 % by weight of at least one surface active compound. The surface active agent is important for good wetting of the substrate resulting in satisfactory cosmetics of the final hard-coating. Said surfactant can include for example poly(alkylene glycol)-modified polydimethylsiloxanes or polyheptamethylsiloxanes, or fluorocarbon-modified polysiloxanes. The heat-curable compositions preferably contain from 0.1 % to 0.3 % of a fluorocarbon-modified polysiloxane, such as the commercial product EFKA^{®} 3034 sold by Ciba Specialty Chemicals.

The coating solution may be coated, for example by spin coating, dip coating, bar coating or spray coating, on any optical substrate whether organic or mineral. The selection of the optical substrate is not critical for the present invention. However for eyewear applications organic glasses are preferred over mineral glasses for reasons well known to the skilled person. Preferred organic glasses are made of allyl diglycol carbonate polymers or thermoplastic polycarbonates.

The coating solution is coated onto the optical substrate with a dry layer coating thickness of between 1 and 10 µm, preferably of between 1.5 and 6 µm.

After coating and optionally drying, in case an organic solvent has been used, the resulting optical substrate coated with the coating solution is submitted, without any prior hydrolysis step, to irradiation with UV light. The curing step (step (b)) comprises irradiating the coated layer with a UV radiation dosage ranging from 0.150 J/cm² to 1.20 J/cm² in the UV-C range (290nm - 100nm). Irradiation times ranged from about 1 second to 10 seconds. Naturally, it is possible to achieve the same dosage range using a lower intensity bulb for a longer time.

To the best knowledge of the inventors, the coating composition, used for implementing the method described above, i.e. anhydrous, epoxyalkyltrialkoxysilane based solutions containing high amounts of triarylsulfonium salts or diaryliodonium salts have not been disclosed in the prior art.

The present invention consequently is also drawn to an essentially anhydrous solution containing from 20 % to 90 % by weight, relative to the total dry matter of the solution, of at least one non hydrolyzed epoxyalkyltrialkoxysilane and at least 3.5 % by weight, preferably from 4.0 % by weight to 15 % by weight, relative to the total dry matter of the solution, of at least one photoinitiator selected from selected from the group consisting of triarylsulfonium salts, diaryliodonium salts, and mixtures thereof, preferably from the group consisting of triarylsulfonium salts.

The method of the present invention is now further described by way of two examples demonstrating respectively the criticality of the photoinitiator concentration and of the unhydrolysed epoxyalkyltrialkoxysilanes.

### Example 1

### Criticality of the minimum amount of triarylsulfonium salt for obtaining good antistatic performance

Five UV curable compositions have been prepared containing the ingredients-in the amounts specified in Table 1.

The mixture of pentaerythritol triacrylate and pentaerythritol tetraacrylate sold under the trade name of PETIA^{®} by. Cytec Industries, was added to the glycidoxypropyltrimethoxysilane at ambient temperature and mixed until the solution was homogeneous.

Next, the photoinitiators UVI-6976 and UVI 6992 (Dow Chemical) and 2-hydroxy-2-methyl-1-phenyl-propan-1-one (Darocur^{®} 1173, from Ciba Specialty Chemicals) was added as a free radical initiator and the mixture was again stirred until homogeneity. Finally, the wetting agent EFKA^{®} 3034 (Ciba Specialty Chemicals) was added and the final coating was mixed vigorously for 30 minutes to ensure homogeneity.

The solutions were then allowed to stir gently using a magnetic stir bar until all bubbles had disappeared.

The coating solution was spin coated to the convex face of CR^{®}-39 lenses using a Headway^{®} spin coater (spin application speed: 800 rpm, application time: 10 seconds; coating spread speed: 1200 rpm, spread spin time: 8 seconds). The coated lenses were then submitted to UV curing in a Fusion Systems^{®} UV belt conveyor under the following conditions:
UV belt conveyor speed: 1.5 m/min (5 ft/min);
Fusion H⁺ bulb;
UV dosage: UV-A: 1.926 J/m², UV-B: 1.513 J/cm², UV-C: 0.327 J/cm², UV-V: 1.074 J/cm²;
UV power: UV-A: 1.121 W/m², UV-B: 0.850 W/cm², UV-C: 0.180 W/cm², UV-V: 0.602 W/cm²;

Table 1 below shows the antistatic performance (decay time) and the transparency features (ASTM Haze and Transmission, both measured by means of a Haze Guard XL-211 plus meter using the standard method ISO 8930-3 with a wavelength range from 380 nm to 780 nm for transmission values and ASTM D 1003-00 for haze values) of the cured coatings.

**Table 1**

| | **Comp. 1** | **Comp. 2** | **Comp. 3** | **Comp. 4** | **Comp. 5** |
|---|---|---|---|---|---|
| glycidoxypropylmethoxysilane | 63.80 % | 62.60 % | 60.40 % | 56.30 % | 49.60 % |
| PETIA^{®} | 31.90 % | 31.23 % | 30.20 % | 28.10 % | 24.80 % |
| UVI-6976* | 1.27 % | 2.51 % | 4.83 % | 9.01 % | 15.87 % |
| UV-6992* | 0.64 % | 1.25 % | 2.41 % | 4.50 % | 7.93 % |
| Total cationic photo-initiator | **0.95 %** | **1.88 %** | **3.62 %** | **6.75 %** | **11.90 %** |
| DAROCUR^{®} 1173 | 1.28 % | 1.25 % | 1.21 % | 1.12 % | 0.99 % |
| EFKA^{®} 3034 | 1.06 % | 1.04 % | 1.01 % | 0.94 % | 0.83 % |
| | | | | | |
| Decay time (seconds) | **1.25** | **0.81** | **0.23** | **0.11** | **0.05** |
| ASTM Haze (%) | 0.1 | 0.12 | 0.15 | 0.13 | 0.12 |
| Transmission (%) | 92.2 | 92.1 | 92.0 | 91.9 | 91.8 |

| | | | | | |
|---|---|---|---|---|---|
| * 50 % in propylene carbonate | | | | | |

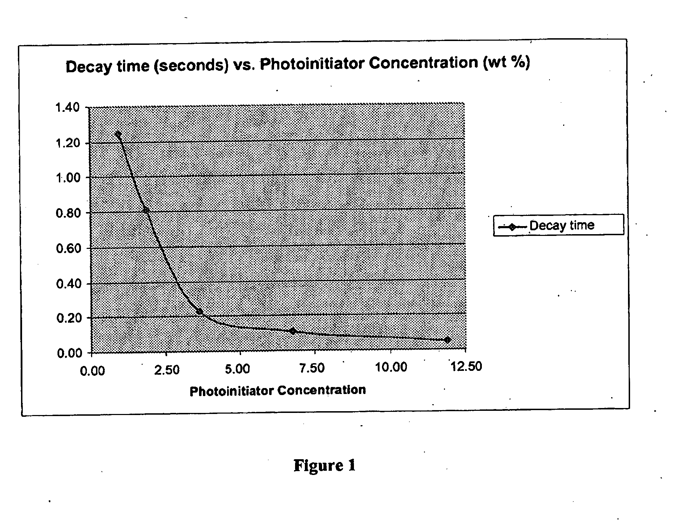

Figure 1, where the decay time results from Table 1 have been plotted against the total concentration of cationic photo-initiator, clearly shows that there is a threshold value of about 3 % by weight of photoinitiator; below this value, there is a drastic increase of the decay time, i.e. an undesirable decrease of antistatic performance of the cured hard-coating.

### Example 2

### Criticality of not hydrolyzing the coating composition before curing.

Compositions 6 to 11 were prepared using rather high amounts of colloidal silica, and 1-propanol to adjust viscosity. The mixture of triacrylate and tetraacrylate (PETIA) used in Example 1 is either omitted (Compositions 6 and 7) or replaced by methacryloxypropoltrimethoxysilane (Compositions 8 and 9) of a diepoxy component (Compositions 10 and 11).

Compositions 6, 8 and 10 are compositions according to the present invention and were prepared and cured in the way described in Example 1.

Compositions 7, 9 and 11 are comparative compositions since the glycidoxypropyltrimethoxysilane was first submitted to hydrolysis by addition of 0.1 N HCl in a separate flask to avoid a large exotherm. Stirring was continued for at least one hour or until the hydrolysate got back to ambient temperature.

For all examples, the 1-propanol was added to the colloidal silica (Organosilicasol^{®} MA-ST, from Nissan Chemical, particle size of between 20 and 30 nm) and mixed using a stirring bar. The glycidoxypropyltrimethoxysilane (compositions 6, 8 and 10) or the hydrolysate thereof (compositions 7, 9 and 11) was added and allowed to mix until homogeneity. The remaining ingredients were added one at a time and the solution was allowed to mix until homogeneity.

The convex sides of CR-39^{®} lenses (PPG Industries) were spin coated and the coatings were cured using the coating and curing parameters described in Example 1. The decay time results were obtained according to ISTM 02-066.

**Table 2**

| **Composition** | **6** | **7** | **8** | **9** | **10** | **11** |
|---|---|---|---|---|---|---|
| colloidal silica | 57.1 % | 55.0 % | 50.9 % | 49.4 % | 50.9 % | 49.4 % |
| 1-propanol | 14.1% | 13.5% | 12.5 % | 12.1 % | 12.5 % | 12.1 % |
| glycidoxypropyl-trimethoxysilane | 23.2 % | 22.3% | 20.6 % | 20.0 % | 20.6 % | 20.0 % |
| 0.1 N HCl | --- | 3.33% | --- | 2.99 % | --- | 2.99 % |
| Methacryloxypropyl-trimethoxysilane | --- | --- | 8.8 % | 8.5 % | --- | --- |
| Hydrogenated bisphenol A diglycidyl ether | --- | --- | --- | --- | 8.8 % | 8.8 % |
| UV-6976* | 5.32 % | 5.1 % | 5.32 % | 5.1 % | 5.32 % | 5.1 % |
| UVI-6992* | 1.78 % | 1.70 % | 1.78 % | 1.70 % | 1.78 % | 1.70 % |
| Total cationic photo-initiator | 3.55 % | 3.40 % | 3.55 % | 3.40 % | 3.55 % | 3.40 % |
| EFKA^{®} 3034 | 0.10 % | 0.10 % | 0.10 % | 0.10 % | 0.10 % | 0.10 % |
| | | | | | | |
| Decay time (sec.) | **0.096** | **> 100** | **0.115** | **> 100** | **0.137** | **> 100** |
| ASTM Haze (%) | 0.12 | 0.25 | 0.11 | 0.21 | 0.13 | 0.17 |
| Transmission AVL (% | 91.7 | 92.1 | 92.0 | 92.0 | 92.0 | 92.1 |
| Coating thickness (µm) | 2.9 | 2.9 | 3.2 | 3.2 | 3.8 | 3.8 |

| | | | | | | |
|---|---|---|---|---|---|---|
| * 50 % in propylene carbonate | | | | | | |

The results in Table 2 show that, rather surprisingly, the hard-coatings obtained with glycidoxypropyl-trimethoxysilane hydrolyzed for about one hour prior to the UV-curing step had very poor anti-static properties with decay times higher than 100 seconds.

Using essentially non hydrolyzed epoxyalkyltrialkoxysilanes thus turned out to be an essential feature of the present invention.

## Claims

1. A method for manufacturing antistatic UV-cured hard-coatings on optical articles, comprising
(a) coating an organic or mineral optical substrate with an anhydrous solution containing from 20 % to 90 % by weight, relative to the total dry matter of the solution, of at least one non hydrolyzed epoxyalkyltrialkoxysilane and at least 3.2 % by weight, relative to the total dry matter of the solution, of at least one photoinitiator selected from the group consisting of triarylsulfonium salts, diaryliodonium salts, and mixtures thereof,
(b) curing the resulting coating by irradiation with UV-radiation,
said method not comprising any hydrolysis step before the UV curing step.

2. The method of claim 1, wherein the photoinitiator is a triarylsulfonium salt selected from triarylsulfonium hexafluoroantimonate, triarylsulfonium hexafluorophosphate or mixtures therof.

3. The method of claim 1 or 2, wherein the epoxyalkyltrialkoxysilanes are selected from glycidyl(C₁₋₃ alkyl)-tri(C₁₋₃ alkoxy)silanes, and is preferably 3-glycidoxypropyltrimethoxysilane.

4. The method of any of claims 1 to 3, wherein the anhydrous solution further contains up to 40 % by weight of polyfunctional monomers selected from polyfunctional acrylate monomers, polyfunctional epoxy monomers and mixtures thereof.

5. The method of claim 4, further comprising from 1 % to 5 % by weight, preferably from 1.5 to 4.5 by weight, relative to the polyfunctional acrylate monomers, of a free radical photo-initiator.

6. The method of claim 4 or 5, wherein the polyfunctional acrylate monomers are selected from the group consisting of diacrylate, triacrylate and tetraacrylate monomers.

7. The method of any of claims 1 to 6, wherein the anhydrous solution further contains up to 30 % by weight of at least one organic solvent.

8. The method of any of claims 1 to 7, wherein the anhydrous solution further contains up to 40 % by weight of at least one dialkoxysilane selected from the group consisting of di(C₁₋₃ alkyl)-di(alkoxy)silanes, di(glyxidyl C₁₋₃)-di(alkoxy)silanes and (C₁₋₃ alkyl)(glycidyl C₁₋₃ alkyl)-di(alkoxy)silanes.

9. The method of claim 8, further comprising a step of drying of the coated layer before curing.

10. The method of any of claims 1 to 9, wherein the anhydrous solution contains from 3.5 % by weight to 15 % by weight, preferably from 4.0 % to 15 % by weight, of at least one photoinitiator selected from triarylsulfonium salts.

11. The method of any of claims 1 to 10, wherein the anhydrous solution further contains up to 50 % by weight, relative to the total dry matter the solution, of colloidal silica particles.

12. The method of any of claims 1 to 11, wherein the anhydrous solution is free of hydrolyzed epoxyalkylalkoxysilanes and hydrolyzed alkylalkoxysilanes.

13. The method of any of claims 1 to 12, wherein the anhydrous solution further contains from 0.05 to 1 % by weight of a surfactant, preferably a fluorocarbon modified polysiloxane.

14. The method of any of claims 1 to 13, wherein the substrate is an organic substrate selected from the group consisting of thermoplastic polycarbonates and allyl diglycol carbonate polymers.

15. The method of any,of claims 1 to 14, wherein the curing step (b) comprises irradiating the coated layer with a UV radiation dosage ranging from 0.150 J/cm² to 1.20 J/cm² in the UV-C range, for about 1 to 10 seconds.

16. An anhydrous solution containing from 20 % to 90 % by weight, relative to the total dry matter of the solution, of at least one non hydrolyzed epoxyalkyltrialkoxysilane and at least 3.2 % by weight, preferably from 4.0 % by weight to 15 % by weight, relative to the total dry matter of the solution, of at least one photoinitiator selected from the group consisting of triarylsulfonium salts, diaryliodonium salts, and mixtures thereof.

## Patentansprüche

1. Verfahren zur Herstellung von antistatischen UVgehärteten Hartbeschichtungen auf optischen Artikeln, bei dem man
(a) ein organisches oder mineralisches optisches Substrat mit einer wasserfreien Lösung, die 20 bis 90 Gew.-%, bezogen auf die gesamte Trockensubstanz der Lösung, mindestens eines nicht hydrolysierten Epoxyalkyltrialkoxysilans und mindestens 3,2 Gew.-%, bezogen auf die gesamte Trockensubstanz der Lösung, mindestens eines Photoinitiators aus der Gruppe bestehend aus Triarylsulfoniumsalzen, Diaryliodoniumsalzen und Mischungen davon enthält, beschichtet,
(b) die erhaltene Beschichtung durch Bestrahlung mit UV-Strahlung härtet,
wobei das Verfahren keinen Hydrolyseschritt vor dem UV-Härtungsschritt umfasst.

2. Verfahren nach Anspruch 1, bei dem es sich bei dem Photoinitiator um ein Triarylsulfoniumsalz, das aus Triarylsulfoniumhexafluoroantimonat, Triarylsulfoniumhexafluorophosphat oder Mischungen davon ausgewählt ist, handelt.

3. Verfahren nach Anspruch 1 oder 2, bei dem die Epoxyalkyltrialkoxysilane aus Glycidyl(C₁₋₃-alkyl)tri(C₁₋₃-alkoxy)silanen ausgewählt sind und vorzugsweise 3-Glycidoxypropyltrimethoxysilan sind.

4. Verfahren nach einem der Ansprüche 1 bis 3, bei dem die wasserfreie Lösung ferner bis zu 40 Gew.-% polyfunktionelle Monomere, die aus polyfunktionellen Acrylat-Monomeren, polyfunktionellen Epoxid-Monomeren und Mischungen davon ausgewählt sind, enthält.

5. Verfahren nach Anspruch 4, ferner umfassend 1 bis 5 Gew.-%, vorzugsweise 1,5 bis 4,5 Gew.-%, bezogen auf die polyfunktionellen Acrylat-Monomere, eines radikalischen Photoinitiators.

6. Verfahren nach Anspruch 4 oder 5, bei dem die polyfunktionellen Acrylat-Monomere aus Diacrylat-, Triacrylat- und Tetraacrylat-Monomeren ausgewählt sind.

7. Verfahren nach einem der Ansprüche 1 bis 6, bei dem die wasserfreie Lösung ferner bis zu 30 Gew.-% mindestens eines organischen Lösungsmittels enthält.

8. Verfahren nach einem der Ansprüche 1 bis 7, bei dem die wasserfreie Lösung ferner bis zu 40 Gew.-% mindestens eines Dialkoxysilans aus der Gruppe bestehend aus Di(C₁₋₃-alkyl)di(alkoxy)silanen, Di(glycidyl-C₁₋₃-alkyl)di(alkoxy)silanen und (C₁₋₃-Alkyl)(glycidyl-C₁₋₃-alkyl)di(alkoxy)silanen enthält.

9. Verfahren nach Anspruch 8, bei dem man ferner die aufgetragene Schicht vor dem Härten trocknet.

10. Verfahren nach einem der Ansprüche 1 bis 9, bei dem die wasserfreie Lösung 3,5 Gew.-% bis 15 Gew.-%, vorzugsweise 4,0 bis 15 Gew.-%, mindestens eines aus Triarylsulfoniumsalzen ausgewählten Photoinitiators enthält.

11. Verfahren nach einem der Ansprüche 1 bis 10, bei dem die wasserfreie Lösung ferner bis zu 50 Gew.-%, bezogen auf die gesamte Trockensubstanz der Lösung, kolloidale Siliciumdioxidteilchen enthält.

12. Verfahren nach einem der Ansprüche 1 bis 11, bei dem die wasserfreie Lösung frei von hydrolysierten Epoxyalkylalkoxysilanen und hydrolysierten Alkylalkoxysilanen ist.

13. Verfahren nach einem der Ansprüche 1 bis 12, bei dem die wasserfreie Lösung ferner 0,05 bis 1 Gew.-% eines Tensids, vorzugsweise eines fluorkohlenwasserstoffmodifizierten Polysiloxans, enthält.

14. Verfahren nach einem der Ansprüche 1 bis 13 bei dem es sich bei dem Substrat um ein organisches Substrat aus der Gruppe bestehend aus thermoplastischen Polycarbonaten und Allyldiglykolcarbonat-Polymeren handelt.

15. Verfahren nach einem der Ansprüche 1 bis 14, bei dem man im Härtungsschritt (b) die aufgebrachte Schicht mit einer UV-Strahlungsdosis im Bereich von 0,150 J/cm² bis 1,20 J/cm² im UV-C-Bereich über einen Zeitraum von etwa 1 bis 10 Sekunden bestrahlt.

16. Wasserfreie Lösung, die 20 bis 90 Gew.-%, bezogen auf die gesamte Trockensubstanz der Lösung, mindestens eines nicht hydrolysierten Epoxyalkyltrialkoxysilans und mindestens 3,2 Gew.-%, vorzugsweise 4,0 Gew.-% bis 15 Gew.-%, bezogen auf die gesamte Trockensubstanz der Lösung, mindestens eines Photoinitiators aus der Gruppe bestehend aus Triarylsulfoniumsalzen, Diaryliodoniumsalzen und Mischungen davon enthält.

## Revendications

1. Procédé de fabrication de couches dures antistatiques durcies aux UV sur des articles optiques, comprenant
(a) le revêtement d'un substrat optique organique ou minéral avec une solution anhydre contenant de 20 % à 90 % en poids, relativement à la matière sèche totale de la solution, d'au moins un époxyalkyltrialcoxysilane non hydrolysé et au moins 3,2 % en poids, relativement à la matière sèche totale de la solution, d'au moins un photoinitiateur choisi dans le groupe constitué par les sels de triarylsulfonium, les sels de diaryliodonium, et les mélanges de ceux-ci,
(b) le durcissement du revêtement résultant par irradiation avec un rayonnement UV,
ledit procédé ne comprenant aucune étape d'hydrolyse avant l'étape de durcissement aux UV.

2. Procédé selon la revendication 1, dans lequel le photoinitiateur est un sel de triarylsulfonium choisi parmi un hexafluoroantimonate de triarylsulfonium, un hexafluorophosphate de triarylsulfonium et les mélanges de ceux-ci.

3. Procédé selon la revendication 1 ou 2, dans lequel les époxyalkyltrialcoxysilanes sont choisis parmi les glycidyl (alkyl en C₁₋₃) -tri (alcoxy en C₁₋₃)silanes, et sont de préférence le 3-glycidoxypropyltriméthoxysilane.

4. Procédé selon l'une quelconque des revendications 1 à 3, dans lequel la solution anhydre contient en outre jusqu'à 40 % en poids de monomères polyfonctionnels choisis parmi les monomères d'acrylate polyfonctionnels, les monomères époxy polyfonctionnels et les mélanges de ceux-ci.

5. Procédé selon la revendication 4, comprenant en outre de 1 % à 5 % en poids, de préférence de 1,5 à 4,5 % en poids, relativement aux monomères d'acrylate polyfonctionnels, d'un photoinitiateur radicalaire.

6. Procédé selon la revendication 4 ou 5, dans lequel les monomères d'acrylate polyfonctionnels sont choisis dans le groupe constitué par les monomères de diacrylate, triacrylate et tétraacrylate.

7. Procédé selon l'une quelconque des revendications 1 à 6, dans lequel la solution anhydre contient en outre jusqu'à 30 % en poids d'au moins un solvant organique.

8. Procédé selon l'une quelconque des revendications 1 à 7, dans lequel la solution anhydre contient en outre jusqu'à 40 % en poids d'au moins un dialcoxysilane choisi dans le groupe constitué par les di(alkyl en C₁₋₃)-di(alcoxy)silanes, les di(glycidyl-alkyl en C₁₋₃)-di (alcoxy) silanes et les (alkyl en C₁₋₃)(glycidyl-alkyl en C₁₋₃)-di(alcoxy)silanes.

9. Procédé selon la revendication 8, comprenant en outre une étape de séchage de la couche déposée avant durcissement.

10. Procédé selon l'une quelconque des revendications 1 à 9, dans lequel la solution anhydre contient de 3,5 % en poids à 15 % en poids, de préférence de 4,0 % à 15 % en poids, d'au moins un photoinitiateur choisi parmi les sels de triarylsulfonium.

11. Procédé selon l'une quelconque des revendications 1 à 10, dans lequel la solution anhydre contient en outre jusqu'à 50 % en poids, relativement à la matière sèche totale de la solution, de particules de silice colloïdale.

12. Procédé selon l'une quelconque des revendications 1 à 11, dans lequel la solution anhydre est dépourvue d'époxyalkylalcoxysilanes hydrolysés et d'alkylalcoxy-silanes hydrolysés.

13. Procédé selon l'une quelconque des revendications 1 à 12, dans lequel la solution anhydre contient en outre de 0,05 à 1 % en poids d'un tensioactif, de préférence un polysiloxane modifié par fluorocarbure.

14. Procédé selon l'une quelconque des revendications 1 à 13, dans lequel le substrat est un substrat organique choisi dans le groupe constitué par les polycarbonates thermoplastiques et les polymères de carbonate d'allyl-diglycol.

15. Procédé selon l'une quelconque des revendications 1 à 14, dans lequel l'étape de durcissement (b) comprend l'irradiation de la couche déposée avec une dose de rayonnement UV allant de 0,150 J/cm² à 1,20 J/cm² dans le domaine UV-C, pendant environ 1 à 10 secondes.

16. Solution anhydre contenant de 20 % à 90 % en poids, relativement à la matière sèche totale de la solution, d'au moins un époxyalkyltrialcoxysilane non hydrolysé et au moins 3,2 % en poids, de préférence de 4,0 % en poids à 15 % en poids, relativement à la matière sèche totale de la solution, d'au moins un photoinitiateur choisi dans le groupe constitué par les sels de triarylsulfonium, les sels de diaryliodonium, et les mélanges de ceux-ci.
